# EUROPÄISCHE PATENTSCHRIFT

(11) **EP 2 759 816 B1**
(45) Veröffentlichungstag und Bekanntmachung des Hinweises auf die Patenterteilung: **13.01.2016**
(21) Anmeldenummer: 14151954.6
(22) Anmeldetag: 21.01.2014
(51) Int. Cl.: G01G 17/04

(54) **Prüfvorrichtung zum gravimetrischen Prüfen von Mehrkanalpipetten**
Testing device for gravimetric testing of multichannel pipettes
Dispositif de contrôle pour le contrôle par gravimétrie de pipettes à plusieurs canaux

(30) Priorität: 25.01.2013 DE 202013000754 U; 19.04.2013 DE 102013207081
(43) Veröffentlichungstag der Anmeldung: 30.07.2014
(73) Patentinhaber: Fraunhofer-Gesellschaft zur Förderung der angewandten Forschung e.V., 80686 München (DE)
(72) Erfinder: Diegeler, Andreas, 97956 Werbach (DE); Lochner, Karl Heinz, 97877 Wertheim (DE); Maleska, Philipp, 97535 Wasserlosen (DE); Muff, Heiko, 97261 Güntersleben (DE)
(74) Vertreter: Pfenning, Meinig & Partner GbR

(56) Entgegenhaltungen:
- EP-B1- 1 698 872
- EP-B2- 1 092 473

## Beschreibung

Die vorliegende Erfindung bezieht sich auf eine Prüfvorrichtung zum gravimetrischen Prüfen von Mehrkanalpipetten gemäß des Oberbegriffs des Anspruchs 1. Als Mehrkanalpipetten kommen dabei im Rahmen der Erfindung insbesondere Kolbenhubpipetten zum Einsatz.

Kolbenhubpipetten mit Luftpolster werden in großer Zahl in chemischen, medizinischen und biologischen Laboratorien zum Übertragen von Flüssigkeitsmengen im Mikroliterbereich eingesetzt. Gegenüber Pipetten aus Glas besitzen Kolbenhubpipetten eine Reihe von Vorteilen. Sie ermöglichen ein sehr schnelles und rationelles Arbeiten und damit größere Probendurchsätze. Durch die aufsteckbare Kunststoffspitze und das Luftpolster wird eine Kontamination der Pipette (z.B. durch radioaktives oder infektiöses Material) vermieden. Eine Reinigung nach dem Gebrauch der Pipette, wie sie bei Glaspipetten immer erforderlich ist, entfällt. Durch Mehrkanalpipetten mit 4, 8, 12 oder 16 Kanälen im Abstand von 9 bzw. 4,5 mm wird die Anzahl der notwendigen Pipettiervorgänge zum Befüllen der darauf abgestimmten Mikrotierplatten, die Vertiefungen ("wells") im 8X12 bzw. 16X24 Raster besitzen, erheblich reduziert und dadurch ein wesentlich schnelleres und effizienteres Arbeiten ermöglicht. Um sicherzustellen, dass die Messgenauigkeit der Kolbenhubpipetten gewährleistet ist, existiert eine Reihe von Vorschriften und Verordnungen. In der Eichordnung ist festgelegt, dass die Messgenauigkeit von Kolbenhubpipetten vom Hersteller geprüft und durch eine Konformitätsbescheinigung (Bauartprüfung) nachgewiesen werden muss. Zertifizierte und akkreditierte Laboratorien müssen nach DIN EN ISO 9000 und GLP-Richtlinien ihre Prüf- und Messmittel, dazu gehören Kolbenhubpipetten, regelmäßig auf ihre Messgenauigkeit überprüfen.

Das gravimetrische Prüfverfahren nach ISO 8655-6 gilt als Referenzverfahren. Bei diesem Verfahren muss das pipettierte Volumen je Kanal zehnmal durch Wägung geprüft werden. Es muss bei Bauartprüfungen vor Ausstellung der Konformitätsbescheinigung angewandt werden. Die erforderliche Auflösung der Waage hängt vom Nennvolumen der Pipette ab. Für alle anderen Prüfungen, z.B. durch den Anwender von Kolbenhubpipetten im Rahmen seiner Prüfmittelüberwachung oder durch den Hersteller im Rahmen seiner Qualitätskontrolle kann dieses Verfahren oder ein anderes Prüfverfahren (z.B. die photometrische Prüfung nach ISO 8655-7) angewandt werden.

Bei der gravimetrischen Prüfung mit einer Analysenwaage werden nach ISO 8655-6 zuerst alle Kanäle mit Spitzen bestückt. Zur Vorbefeuchtung des Luftpolsters in Spitze und Pipette muss unmittelbar vor der eigentlichen Messung zuerst fünfmal mit Wasser pipettiert werden (Konditionierung). Bei der Prüfung der Messgenauigkeit müssen nach ISO 8655 alle Kanäle gefüllt werden, um Fehler durch Kippeffekte infolge ungleichmäßiger Belastung der einzelnen Kanäle zu vermeiden. Anschließend wird der Inhalt eines Kanals in ein tariertes Wägegefäß pipettiert und durch Wägung das pipettierte Wasservolumen bestimmt. Dazu muss der Luftauftrieb und die Wasserdichte berücksichtigt werden. Pro Kanal sind nach ISO 8655 10 Messungen vorgeschrieben. Da Mehrkanal-Kolbenhubpipetten immer eine Volumeneinstellmöglichkeit besitzen, muss die Prüfung beim Nennvolumen, dem halben Nennvolumen und dem kleinsten einstellbaren Volumen erfolgen. Während bei Einkanal-Kolbenhubpipetten mit festem Volumen nur 10 Wägungen nötig sind, sind bei einer 12-Kanal Kolbenhubpipette 360 Wägungen erforderlich. Bei einer Einkanalpipette beträgt die Prüfdauer etwa 10 Minuten während bei einer 12-Kanalpipette dafür etwa zweieinhalb Stunden benötigt werden.

Um die hohen Personalkosten für eine Überprüfung von Mehrkanal-Kolbenhubpipetten zu reduzieren existieren bisher drei Lösungen. Bei allen drei Lösungen wird eine Beschleunigung dadurch erreicht, dass bei einem Pipettiervorgang nicht in ein Gefäß, sondern bei einer 12-Kanalpipette gleichzeitig in zwölf Gefäße pipettiert wird. Somit sind bei einer 12-Kanalpipette nur noch 30 Wägungen, statt 360 Wägungen, erforderlich.

Bei der ersten Lösung (SpeedCal) aus dem Stand der Technik (EP 1092 473 B2) befinden sich 12 Wägegefäße im Abstand der Pipettenspitzen (9 mm) nebeneinander auf 12 Kragarmen, von denen jeder mit einer Wägezelle verbunden ist. Die Auflösung der nach dem Prinzip der elektromagnetischen Kraftkompensation arbeitenden Wägezellen beträgt 0,01 mg. Durch die hohe Auflösung ist es möglich alle gängigen Größen von Mehrkanalpipetten zu prüfen. Da die Wägezellen sehr groß sind, wurden je sechs Wägezellen in zwei Ebenen um die Wägegefäße angeordnet. Die zur Verbindung der Wägegefäße mit den Wägezellen erforderlichen Kragarme müssen dazu notwendigerweise untereinander einen Winkel von mehr als Null Grad aufweisen. Zur Reduzierung von Verdunstungsverlusten enthält SpeedCal eine sogenannte Verdunstungsfalle. Zur Prüfung einer Pipette wird gleichzeitig mit allen Spitzen in die vorher tarierten Gefäße pipettiert. Nach dem Einschwingen der Wägezellen werden sofort die Werte in einen angeschlossenen Computer eingelesen und wieder tariert. Danach kann sofort wieder in die Gefäße pipettiert werden. Dadurch, dass sofort nach dem Einschwingen und Auslesen der Wägewerte die Pipette wieder neu gefüllt wird, erfolgt die ganze Prüfung (30 Wägungen) in weniger als zehn Minuten. Die Luftauftriebskorrektur und die Volumenberechnung mit Hilfe der Wasserdichte sowie die statistische Auswertung (Mittelwert und Standardabweichung, Vergleich mit den erlaubten Fehlergrenzen) erfolgt unmittelbar nach der letzten Pipettierung. Dazu müssen Lufttemperatur, Luftdruck und Wassertemperatur eingegeben werden. Das Entleeren der 12 Gefäße erfolgt über eine 12-Kanal-Saugpumpe.

Die erste Lösung bietet ein schnelles gravimetrisches Mehrkanalpipettenprüfgerät. Da Wasser als Prüfflüssigkeit verwendet wird, entstehen abgesehen vom Stromverbrauch keine weiteren Folgekosten. Da das Gerät sehr groß und sehr schwer ist, kann es aber nur stationär eingesetzt werden.

Die vergleichbare Vorrichtung nach EP 1 698 872 B1 basiert ebenfalls auf Gravimetrie. Gleichgeartete Wägegüter können dabei mittels einer Mehrzahl von Wägemodulen und mit einer gleichen Anzahl von Lastträgern gleichzeitig gewogen werden. Die Lastträger sind dabei rotationssymmetrisch um eine Mittellängsachse auf mindestens zwei Ebenen angeordnet. Diese Vorrichtung bietet dabei den Vorteil, dass Sie auch im Grammbereich geeignet ist.

Das Gerät (MCP) nach EP 1 223 415 A2 (zweite Lösung) besteht aus einer einzelnen Waage mit einer Auflösung von 0,01 mg und einer Halterung für 12 Wägegefäße und einer Transportvorrichtung. Bei einer Pipettenprüfung werden zunächst die leeren Gefäße gewogen und die Ergebnisse in einem Rechner gespeichert. Beim MCP erfolgt die Wägung der Wägegefäße nacheinander, wobei jedes Gefäß durch die Transportvorrichtung einzeln auf die Waage gesetzt wird. Beim Entfernen der gewogenen Gefäße von der Waage wird gleichzeitig das nächste Gefäß aufgesetzt. Wenn alle Gefäße gewogen sind, wird gleichzeitig in die 12 Wägegefäße pipettiert und anschließend werden die Gefäße wieder wie oben beschrieben nacheinander gewogen und die Werte abgespeichert. MCP enthält ebenfalls eine Verdunstungsfalle sowie eine Vorrichtung zum Verschließen der Gefäße die sich nicht auf der Waage befinden. Die Auswertung der Ergebnisse erfolgt über einen angeschlossenen Computer. Mit einer einzelnen MCP-Einheit dauert die Messung einer 12-Kanalpipette 59 Minuten. Es können bis zu 5 Einheiten miteinander vernetzt werden. Dann dauert die Prüfung 14 Minuten. Zum Entleeren der Gefäße dient eine 4-Kanal-Saugpumpe. Bei der vollen Ausbaustufe müssen dann 60 Gefäße mit der 4-Kanal-Saugpumpe entleert werden.
Das MCP benutzt ebenfalls Wasser als Prüfflüssigkeit. Daher ähnliche Folgekosten wie bei SpeedCal. Das MCP kann schrittweise von einem Modul auf bis zu fünf Module erweitert werden. Dadurch ist es möglich die Investitionskosten zeitlich zu verteilen bzw. an den tatsächlichen Bedarf anzupassen, da für kleine Labore mit wenigen Pipetten ein Gerät bzw. eine kleinere Ausbaustufe ausreicht. Das Gerät ist selbst in der höchsten Ausbaustufe deutlich langsamer als SpeedCal.

Beim MVS (DE 02 786 771 T1 und EP 1454 125 B1) handelt es sich um ein photometrisches Prüfverahren (dritte Lösung). Bei diesem Verfahren wird in eine Mikrotiterplatte pipettiert. Als Photometer wird eine Reader für Mikrotiterplatten eingesetzt. Die Genauigkeit des Verfahrens wird durch ratiometrische Photometrie mit zwei Farbstoffen verbessert. Mit der Pipette wird eine Probelösung, die sowohl einen roten als auch einen blauen Farbstoff enthält, in die Vertiefungen ("wells") der Mikrotiterplatte pipettiert. Anschließend wird jedes Well mit einem Verdünnungsmittel aufgefüllt und die Lösungen werden in der Platte gemischt. Das Ergebnis ist unabhängig vom Volumen des hinzugefügten Verdünnungsmittels. Die Absorptionswerte der beiden Farbstoffe werden gemessen und das pipettierte Volumen daraus berechnet.

Die Methode ist sehr schnell, erfordert weniger als 5 bzw. 10 Minuten, ist einfach zu bedienen, transportabel und kaum von Umgebungsbedingungen abhängig.

Das Verfahren ist aber keine Referenzmethode und, wie die Fehlerangaben zeigen, nicht so genau wie die Gravimetrie. Die speziell für dieses System hergestellten sehr teuren Farbstofflösungen, die nur 9 Monate haltbar sind, müssen fertig angesetzt gekauft werden, wodurch hohe Folgekosten entstehen. Für kleine Laboratorien ist dies akzeptabel, für Hersteller von Pipetten und Kalibrierlabore, die viele Mehrkanalpipetten prüfen müssen, sind die Folgekosten viel zu hoch. Es können nur Pipetten bis zu einem Volumen von höchstens 350 µl geprüft werden, da die Wells kein größeres Volumen aufnehmen können.

Ausgehend vom Stand der Technik ist es daher die Aufgabe der vorliegenden Erfindung, eine Prüfvorrichtung zum gravimetrischen Prüfen von Mehrkanalpipetten zur Verfügung zu stellen, mit der Mehrkanalpipetten schnell (mit ähnlicher Geschwindigkeit wie beim SpeedCal-System), zuverlässig und mit geringen Folgekosten geprüft werden können. Die erfindungsgemäße Prüfvorrichtung soll darüberhinaus als transportable Mehrkanalpipettenprüfanlage realisierbar sein.

Diese Aufgabe wird durch eine Prüfvorrichtung gemäß Anspruch 1 gelöst. Vorteilhafte Ausführungsvarianten lassen sich den abhängigen Ansprüchen entnehmen.

Nachfolgend wird die vorliegende Erfindung zunächst allgemein, dann anhand eines Ausführungsbeispiels im Detail beschrieben.

Eine erfindungsgemäße Prüfvorrichtung zeichnet sich erfindungsgemäß dadurch aus, dass die Behältnisse (zur Aufnahme der Prüfvolumina der einzelnen Pipettenkanäle der Mehrkanalpipette) als Lastaufnehmer der den Behältnissen zugeordneten Wägezellen ausgebildet sind.

Die Konfiguration ist dabei wie folgt: Mit einer Wägezelle, wie sie aus dem Stand der Technik bekannt ist, ist normalerweise bei bekannten Systemen ein Lastaufnehmer verbunden. Genauer gesagt weist eine Wägezelle ein lasteinleitendes Element (dabei kann es sich beispielsweise um einen zylinderförmigen Zapfen handeln) auf, das so mit dem Lastaufnehmer verbunden ist, dass die auf den Lastaufnehmer (durch die zu wägende Masse) ausgeübte Kraft über das lasteinleitende Element an die Wägezelle übertragen wird (und somit vermittels der Wägezelle messbar ist). Auf den Lastaufnehmer wird also die zu wägende bzw. im vorliegenden Fall die zu prüfende Last (im Falle der Mehrkanalpipettenprüfung also ein Prüfvolumen eines einzelnen Pipettenkanals bzw. ein mit diesem Prüfvolumen gefülltes Behältnis) aufgesetzt, d.h. der Lastaufnehmer wird zum Wägen mit der separaten, zu wägenden Last belastet. Die Krafteinleitung in die Wägezelle erfolgt also von der Gewichtskraft des Prüfvolumens (ggf. samt des Behältnisses) auf den Lastaufnehmer, der (ggf. über einen Adapter) die entsprechende Kraft auf die Wägezelle (bzw. das lasteinleitende Element derselben) überträgt.

Anders als in diesem bekannten Aufbau werden nun erfindungsgemäß die bislang getrennten Bauelemente Lastaufnehmer und Behältnis (für das Prüfvolumen eines Pipettenkanals) in ein und demselben Bauelement, vorzugsweise einstückig, verwirklicht: Behältnis und Lastaufnehmer bilden ein und dieselbe Einheit. Anders ausgedrückt ist erfindungsgemäß der (dazu in der Regel hohl ausgebildete, also mit dem Prüfvolumen füllbare (siehe nachfolgend)) Lastaufnehmer selbst die zu wägende Last.

Erfindungsgemäß beinhaltet das Merkmal, dass die Behältnisse als Lastaufnehmer der Wägezellen ausgebildet sind auch Ausführungsformen bei denen die Behältnisse lediglich Teilabschnitte der jeweiligen Lastaufnehmer der einzelnen Wägezellen sind oder bei denen die Lastaufnehmer lediglich als Teilabschnitte der jeweiligen Behältnisse ausgebildet sind.

Insbesondere kann die Wägezelle zum Einleiten der Last als lasteinleitendes Element einen vorzugsweise zylindrischen Zapfen aufweisen. Mit diesem kann der bevorzugt ebenfalls zylinderförmige Adapter beispielsweise durch Aufstecken oder Aufschrauben verbunden sein. Am Adapter kann dann (beispielsweise durch Aufkleben) das Behältnis unbeweglich befestigt sein. Alternativ dazu kann das Behältnis aber auch relativ zum Adapter justierbar befestigt sein. Besagter Adapter kann erfindungsgemäß dazu dienen, den (kleinen) Durchmesser des lasteinleitenden Elementes (z.B. Zapfen mit einem Durchmesser von 1 mm) auf einen größeren Durchmesser (z. B. zylinderförmiger Adapter mit einem Durchmesser von 3 mm) zu erweitern, um ein stabileres Halten bzw. Befestigen des Behältnisses zu ermöglichen

Die einzelnen Behältnisse (bevorzugt: alle Behältnisse) als mit dem jeweiligen Prüfvolumen des zugehörigen Pipettenkanals befüllbare Hohlkörper ausgebildet. Bei diesen Hohlkörpern handelt es sich um längliche Hohlkörper, die sich (in Längsrichtung gesehen) von ihrem Zentrum nach Außen hin (genauer: zumindest in Richtung auf eines ihrer beiden äußeren Enden hin) verjüngen.

Die Hohlkörpern sind (in einem Schnitt durch ihre Längsachse und/oder parallel zu einer Ebene, in der die Wägezellen und/oder in der die Behältnisse angeordnet sind, gesehen) näherungsweise als rautenförmige Hohlkörper ausgebildet. Die Rautendiagonale entlang der Längsachse ist dabei bevorzugt mindestens dreimal, besonders bevorzugt mindestens fünfmal so groß wie die Rautendiagonale quer zur Längsachse der Hohlkörper.

Weitere vorteilhafte Merkmale der Erfindung können wie folgt realisiert werden: Mindestens eines der, bevorzugt alle der Behältnisse weist/weisen (jeweils) einen zur Aufnahme einer Pipettenspitze ausgebildeten Einfüllstutzen zum Befüllen des (jeweiligen) Hohlkörpers auf. Der/die Einfüllstutzen ist/sind bevorzugt (jeweils) an einem sich verjüngenden Ende des/der Behältnisse(s) angeordnet. Erfindungsgemäß ist der Begriff des Einfüllstutzens dabei nicht auf eine definierte (z.B. zylindrische) Form eingeschränkt: ein erfindungsgemäßer Einfüllstutzen kann im einfachsten Fall auch als einfache Einfüllöffnung, die in den Hohlraum des als Hohlkörper ausgebildeten Behältnisses führt, ausgebildet sein. Die die Pipettenspitzen der Mehrkanalpipetten aufnehmenden Einfüllstutzen sind bevorzugt jeweils an einem der spitzwinkligen Enden der rautenförmigen Hohlkörper angeordnet.

Gemäß Anspruch 6 enthält/enthalten mindestens eines der, bevorzugt alle der Behältnisse zumindest abschnittsweise einen Kunststoff, insbesondere Polyvinylchlorid (oder besteht/bestehen daraus).

Dieser Kunststoff ist vorzugsweise zumindest abschnittsweise mit einer Metallbeschichtung, insbesondere einer Goldbeschichtung, versehen. Die im Anspruch 6 beschriebenen, bei Bedarf metallisierten (metallbeschichteten) Kunststoffbehälter lassen sich insbesondere durch das Rapid-Prototyping-Verfahren herstellen. Die Metallbeschichtung kann durch verschiedene Sprühverfahren (z.B. "Elektrostatisches Sprühverfahren") aufgebracht werden. Die Kunststoffwanddicke der Behältnisse kann dabei vorzugsweise zwischen 0,5 mm und 1 mm betragen, die Dicke der vorzugsweise im Inneren der Hohlkörper ebenso wie auf der äußeren Oberfläche der Hohlkörper aufgebrachten Metallschicht kann vorzugsweise zwischen 100 Nanometer und 500 Nanometer betragen. Die Metallbeschichtung besteht vorzugsweise aus Kupfer oder Gold. Der beschriebene Metallüberzug der Behälter dient dabei insbesondere dem Abführen elektrischer Ladungsträger (also der Vermeidung elektrostatischer Aufladungseffekte).

Mindestens eines der Behältnisse ist/sind, bevorzugt alle der Behältnisse, (jeweils) zentrisch auf dem/den lasteinleitenden Element(en) seiner/ihrer Wägezelle(n) angeordnet.

Die Wägezellen können in zwei Reihen, bevorzugt in zwei parallel zueinander und/oder in einer Ebene verlaufenden Reihen, angeordnet sein, wobei die lasteinleitenden Elemente der Wägezellen einer jeder dieser Reihen jeweils auf derjenigen Seite dieser Wägezellen positioniert sind, die den Wägezellen der jeweils anderen Reihe zugewandt ist.

Die Einfüllstutzen der zu den Wägezellen der beiden Reihen gehörenden Behältnisse können auf einer bevorzugt mittig zwischen den beiden Reihen verlaufenden Geraden positioniert sein, wobei entlang dieser Geraden gesehen abwechselnd Einfüllstutzen von Behältnissen einer der beiden Reihen und von Behältnissen der anderen der beiden Reihen angeordnet sein können.

Erfindungsgemäß können die eingesetzten Wägezellen nach dem Prinzip der elektromagnetischen Kraftkompensation, das dem Fachmann bekannt ist, arbeiten. Grundsätzlich lassen sich jedoch auch Wägezellen einsetzen, die auf einem anderen Prinzip basieren.

Bevorzugt realisierte geometrische Anordnungen der einzelnen Wägezellen, deren Behältnisse sowie deren Einfüllstutzen lassen sich den abhängigen Ansprüchen 4, 9 und 10 entnehmen.

Der Abstand *aWZ* unmittelbar benachbarter Wägezellen in mindestens einer der beiden Reihen, bevorzugt in beiden Reihen, kann dabei größer sein, bevorzugt um mindestens den Faktor 1.5 größer sein, bevorzugt um mindestens den Faktor 2.0 größer sein, als der Abstand *aES* unmittelbar benachbarter Einfüllstutzen entlang der Geraden, als die maximale laterale Ausdehnung *dES* dieser Einfüllstutzen und/oder als der Abstand benachbarter Pipettenkanäle der Mehrkanalpipette. Unter der die laterale Ausdehnung gemäß Anspruch 10 definierenden Lateralrichtung wird erfindungsgemäß eine Richtung verstanden, die parallel zu einer Ebene ist, in der die Wägezellen und/oder die Behältnisse der erfindungsgemäßen Prüfvorrichtung angeordnet sind (bei zylinderförmigen Einfüllstutzen entspricht die maximale laterale Ausdehnung dem Durchmesser der Einfüllstutzen). Der Abstand unmittelbar benachbarten Einfüllstutzen ist (in Lateralrichtung bzw. in besagter Ebenen gesehen) vom Zentrum eines Einfüllstutzenes zum Zentrum des jeweils benachbarter Einfüllstutzens zu bestimmen. Entsprechendes gilt für den Abstand benachbarter Pipettenkanäle.

Ein besonders vorteilhaftes geometrisches Merkmal, das im Rahmen der Erfindung verwirklicht werden kann, beschreibt Anspruch 11: Dieses Merkmal ermöglicht, dass erfindungsgemäß mehrere, beispielsweise 4, 8 oder auch 12 einzelne, nebeneinander liegende Pipettenkanäle einer Mehrkanalpipette parallel, also gleichzeitig geprüft und ausgewertet werden können. Dies ist insbesondere auch dann möglich wenn die Breite (bzw. die Dicke) der Gehäuse der einzelnen Wägezellen größer ist, als der Abstand unmittelbar benachbarter Pipettenkanäle (bzw. der Abstand zweier unmittelbar benachbarter Einfüllstutzen der Behältnisse zur Aufnahme der Prüfvolumina der einzelnen Pipettenkanäle).

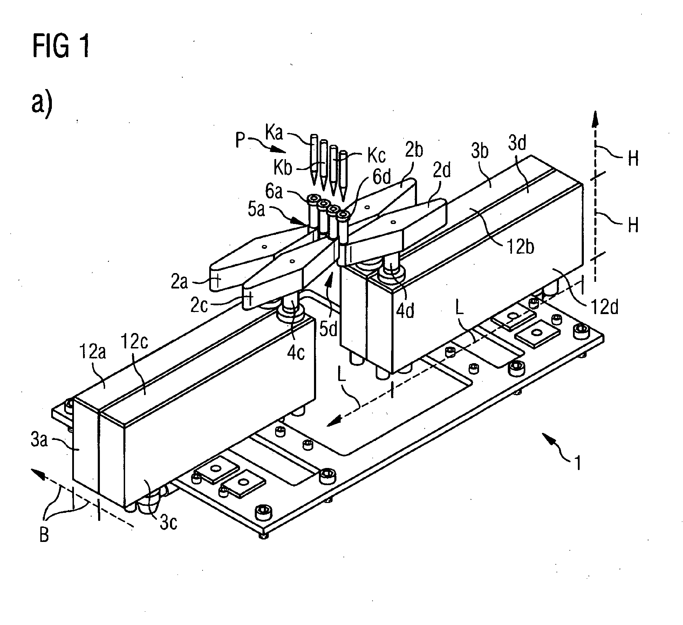

Damit lassen sich erfindungsgemäß insbesondere auch Wägezellen gemäß Anspruch 12 einsetzen: Die Wägezellen können Gehäuse umfassen, die in einer ersten Raumrichtung (Breitenrichtung B) eine um mindestens den Faktor drei geringere Ausdehnung aufweisen als in zwei anderen, bevorzugt zur ersten Raumrichtung B und zueinander jeweils senkrechten Raumrichtungen (Längenrichtung L und Höhenrichtung H) und dass die Breitenrichtung B der Wägezellen in einer durch die Anordnung der Behältnisse und/oder durch die beiden Reihen definierten Ebene liegt und/oder parallel zur vorbeschriebenen Geraden verläuft. (Vgl. hierzu auch nachfolgende Figur 1a, in der die Bezugszeichen H, L und B sowohl die Raumrichtungen eines kartesischen Koordinatensystems als auch die Ausdehnung des Gehäuses der Wägezellen in besagte Raumrichtungen bezeichnen.)

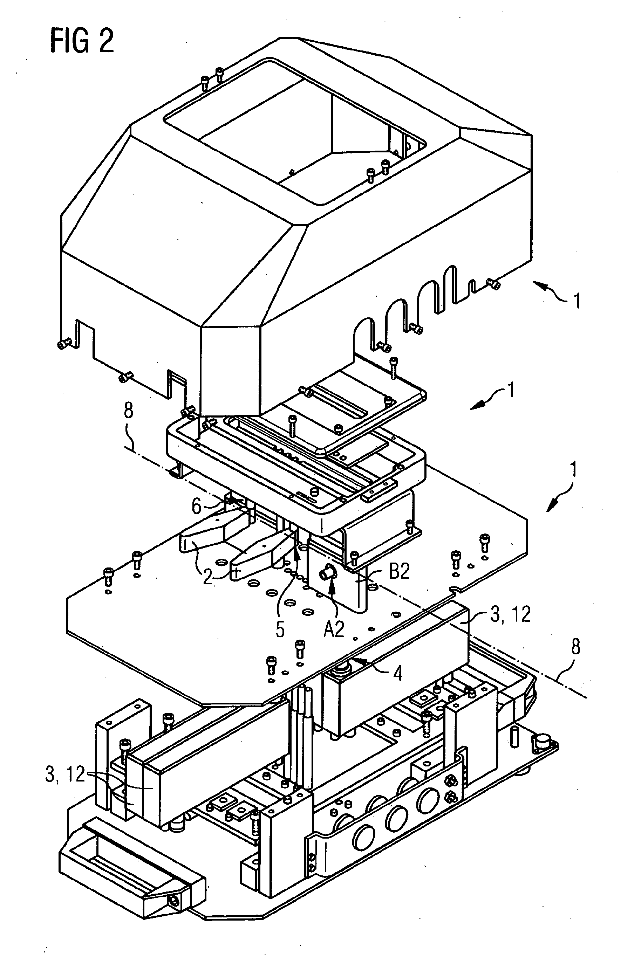

Erfindungsgemäß wird die Prüfvorrichtung vorzugweise als transportable, von einem Schutzgehäuse umschlossene mobile Mehrkanalpipettenprüfanlage ausgebildet (vgl. auch Figur 2).

Erfindungsgemäß wird somit eine gravimetrische Prüfvorrichtung zum Durchführen eines gravimetrischen Prüfverfahrens vorgestellt. Als Wägezellen können insbesondere flache, im Hochformat angeordnete Wägezellen der Firma Sartorius Mechatronics (Sartorius WZA25-NC) eingesetzt werden. Diese sind in ihrer Bauform sehr klein, womit durch die Hochformatanordnung ein sehr platzsparender Aufbau ermöglich ist (der letztendlich die Größe der erfindungsgemäßen Vorrichtung erheblich reduziert und somit den mobilen Einsatz ermöglicht). Diese Wägezellen besitzen eine Auflösung von 0.01 mg bei einem Wägebereich von 20 g (Vorlast von 5 g). Durch Herstellung von Kunststoffgefäße durch Rapid-Prototyping (bei gegebenenfalls anschließendem Metallüberzug der Behälteroberfläche) lassen sich sehr leichte Behälter zusammen mit besagten Wägezellen einsetzen. Damit können Wägegefäßvolumina (also Prüfvolumina) von mehr als 12 ml erreicht werden. Vorteilhaft ist dabei der Einsatz von Kunststoff wie beispielsweise PVC und der erfindungsgemäße Verzicht auf Tragarme bzw. auf Gestänge oder Hebelanordnungen zum Übertrag der Kraftaufnahme vom Behältnis zum lasteinleitenden Element bzw. zur Wägezelle, sodass gerade durch die Kombination aus sehr leichten Behältnissen und den Verzicht auf Tragarme ein sehr geringes Gewicht und somit trotz der vergleichsweise gering belastbaren Wägezellen dennoch ausreichende Prüfvolumina erreicht werden können.

Erfindungsgemäß werden die Behältnisse (bis auf einen ggf. vorzusehenden Adapter) direkt auf die Wägezelle bzw. das lasteinleitende Element derselben gesetzt. Die Behältnisse fungieren somit durch ihre spezielle Form, mit der sie als Lastaufnehmer ausgebildet sind, selbst als Tragarm bzw. Lastaufnehmer der Wägezellen und ermöglichen es somit, dass die Einfüllöffnungen bzw. Einfüllstutzen ohne zusätzliche Gestänge, Hebelarme oder dergleichen direkt im Abstand der einzelnen Pipettenkanäle (von z.B. 9 mm) angeordnet werden können.

Die erfindungsgemäße Prüfvorrichtung kann transportabel ausgebildet werden und kann somit auch von Kalibrierlaboratorien bei Kunden derselben vor Ort eingesetzt werden.

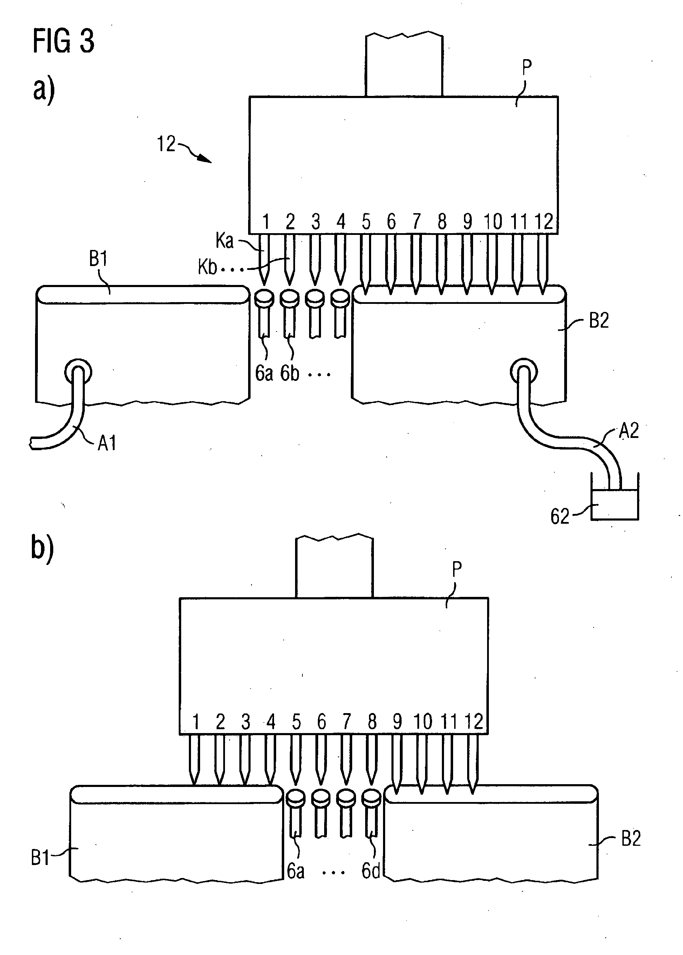

Erfindungsgemäß können die Prüfvorrichtungen als 4-, 8- oder 12-(Pipetten)Kanalgeräte ausgebildet werden. Ein Ausbau eines 4-Kanalgerätes zu einem 8- oder 12-Kanalgerät ist ebenfalls möglich. Insbesondere in der 4-Kanalversion (für 4 nebeneinander liegende Pipettenkanäle) sind die Investitionskosten vergleichsweise gering. Die 4-Kanalversion ist ebenfalls in der Lage, Pipetten mit mehr als 4 Kanälen zu prüfen. Dazu werden z.B. bei einer 12-Kanalpipette die Kanäle 1-4, dann die Kanäle 5-8 und im letzten Durchgang die Kanäle 9-12 geprüft. Der Inhalt der z.B. im ersten Durchgang nicht geprüften Kanäle 5-12 läuft durch seitlich angebrachte Ablaufkanäle in einen Auffangbehälter. Siehe hierzu auch nachfolgend noch beschriebene Figur 3.

Eine erfindungsgemäße Prüfvorrichtung kann (abgesehen von der internen Mechanik der Wägezellen) ohne jegliche bewegliche Teile wie beispielsweise Motoren oder dergleichen auskommen. Die Prüfvorrichtung ist somit für einen äußert langlebigen Gebraucht geeignet und geräuschlos im Betrieb.

Die Prüfvorrichtung kann in der 12-Kanalversion mit maximal drei Kabeln mit einer Elektronikbox (zur Steuerung und Messwerterfassung) verbunden werden, die wiederum mit nur einem Kabel mit einem handelsüblichen PC (mit entsprechender Auswertesoftware zur Auswertung der erfassten Messwerte) verbunden werden kann. Dadurch ist die erfindungsgemäße Prüfvorrichtung mobil und wesentlich platzsparender als bekannte, mit hoher Geschwindigkeit arbeitende Geräte. Ein einfacher Transport, ein einfacher Aufbau und eine einfache Bedienung sind möglich.

Durch die Verwendung von Wasser als Prüfflüssigkeit entstehen erfindungsgemäß geringe Folgekosten. Das Entleeren der 4-, 8- oder 12 Behältnisse kann durch einmaliges parallel durchgeführtes Absaugen mit einer mit entsprechender Kanalzahl realisierten Saugvorrichtung (Saugpumpe) gewährleistet werden.

Die Geschwindigkeit, mit der eine Mehrkanalpipette geprüft werden kann, ist eben so groß wie bei der EP 1092 473 B2 (und deutlich größer als bei der EP 1 223 415 A2) bei deutlich einfacherem Aufbau.

Nachfolgend wird die vorliegende Erfindung anhand des Ausführungsbeispiels näher erläutert.

Dabei zeigen
- Figur 1a: eine Schrägansicht auf die wesentlichen Bauelemente der Prüfvorrichtung 1,
- Figur 1b: eine Aufsicht (auf eine Ebene, in der die Wägezellen angeordnet sind bzw. die Behältnisse derselben angeordnet sind),
- Figur 1c: einen vergrößerten Ausschnitt aus Figur 1b entlang der Geraden 8 zum besseren Verständnis der Geometrie,
- Figur 2: eine Explosionszeichnung der Prüfvorrichtung gemäß Figur 1 und
- Figur 3: wie mit der Prüfvorrichtung mit vier Behältnissen und vier Wägezellen gemäß Figur 1a auch Mehrkanalpipetten mit mehr als vier Pipettenkanälen (hier: 12 Pipettenkanälen) geprüft werden können.

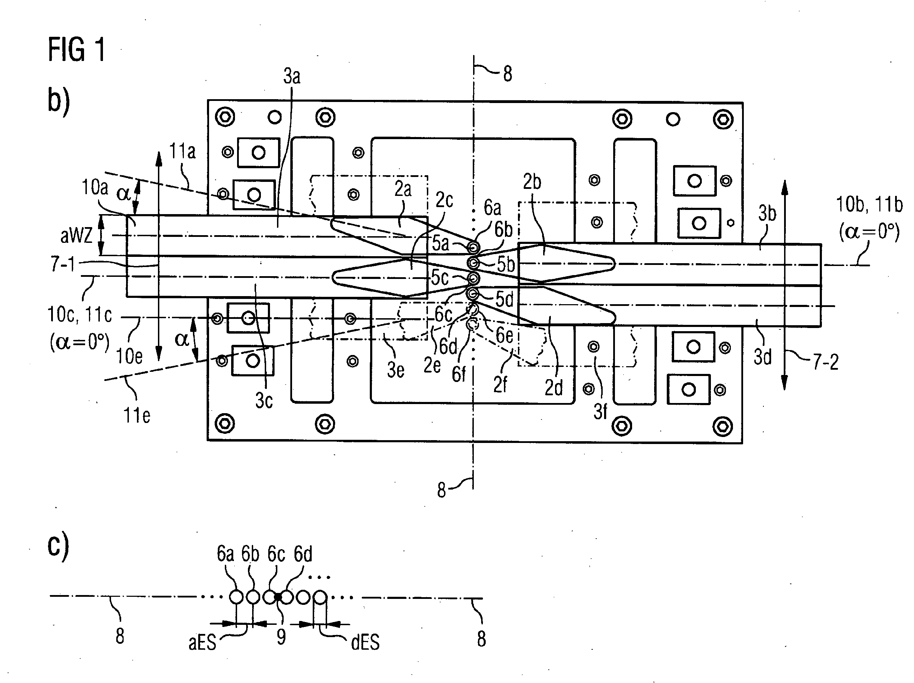

Figur 1 zeigt eine erfindungsgemäße Prüfvorrichtung 1 zum gravimetrischen Prüfen einer Mehrkanalpipette P mit insgesamt vier entlang einer Linie mit jeweils konstantem Abstand angeordneten Pipettenkanälen Ka bis Kd (von der Vierkanalpipette P sind lediglich die vier Pipettenkanäle Ka bis Kd angedeutet). Der Abstand zweier unmittelbar benachbarter Pipettenkanäle (z.B. der Kanäle Ka und Kb) beträgt hier 9 mm.

Die Prüfvorrichtung 1 umfasst somit genau vier zur Aufnahme der vier Prüfvolumina der vier Pipettenkanäle ausgebildete Behältnisse 2a bis 2d, wobei jedem Behältnis genau eine Wägezelle 3a bis 3d zum Wiegen des Behältnisses samt des ggf. darin befindlichen Prüfvolumens eines Pipettenkanals zugeordnet ist: Jede Wägezelle trägt genau ein Behältnis.

Die Wägezellen 3a bis 3d arbeiten jeweils nach dem Prinzip der elektromagnetischen Kraftkompensation und weisen jeweils ein quaderförmiges Gehäuse (die vier Gehäuse 12a bis 12d) mit einer Höhenausdehnung H = 68 mm, einer Breitenausdehnung B = 24 mm und einer Längenausdehnung L = 180 auf. Die Gehäuse 12a bis 12d sind hier hochkant angeordnet, also mit der Höhe H senkrecht zu einer Ebene, in der die einzelnen Behältnisse 2a bis 2d angeordnet sind. Die Breitenrichtung B (Dicke der Wägezellengehäuse) liegt hier somit parallel zur besagten Ebene der Behältnisse (sowie parallel zur Geraden 8 der Einfüllstutzen, vgl. nachfolgend). Die Längenrichtung L der Gehäuse liegt hier parallel zur Ebene in der die Behältnisse 2a bis 2d angeordnet sind, sowie senkrecht zur Breitenausdehnung B (bzw. zur Geraden 8) und senkrecht zur Höhenausdehnung H.

Die insgesamt vier Wägezellen 3a bis 3d sind in zwei Gruppen, einer ersten Gruppe, die die Zellen 3a und 3c umfasst, und in einer zweiten Gruppe, die die beiden Zellen 3b und 3d umfasst, aufgeteilt. Die Zellen 3a und 3c der ersten Gruppe sind in Richtung ihrer Breitenausrichtung B gesehen entlang einer ersten Reihe 7-1 mit ihren Gehäusen 12a und 12c unmittelbar aufeinander gestapelt. Ebenso sind die Zellen 3b und 3d der zweiten Gruppe in Richtung ihrer Breitenausdehnung B gesehen entlang einer zweiten Reihe 7-2, die parallel zur ersten Reihe 7-1, jedoch beabstandet davon verläuft, unmittelbar aneinandergrenzend aufeinander gestapelt. Alle Wägezellen liegen in einer Ebene und mit ihren Gehäusen parallel zueinander. Die beiden Gruppen von Wägezellen sind voneinander beabstandet angeordnet.

Entlang der Reihenrichtungen 7-1 und 7-2, also in Breitenrichtung B gesehen, sind die beiden Zellen 3a und 3c um die halbe Gehäuseausdehnung eines Gehäuses 12 zu den Zellen 3b und 3d der zweiten Reihe 7-2 versetzt positioniert. Die einander zugewandten Stirnseiten der somit mit ihren Flachseiten parallel zur H-L-Ebene positionierten Zellen weisen hier einen Abstand von 25 mm auf (Abstand der beiden zur Geraden 8 hingewandten Stirnflächen der Zellen 3a und 3c von den beiden dieser Geraden 8 zugewandten Stirnflächen der Zellen 3b und 3d in L-Richtung gesehen). Die Gehäuse 12a bis 12d der Wägezellen 3a bis 3d sind mit ihren den Behältnissen 2a bis 2d gegenüberliegenden Unterseiten jeweils auf einem Rahmen verschraubt, sodass die Position der einzelnen Wägezellen 3a bis 3d relativ zueinander fix ist.

Jede Zelle 3a bis 3d weist auf ihrer der Geraden 8 zugewandten Gehäuseseite (in unmittelbarer Nähe ihrer der Geraden 8 zugewandten Stirnfläche) auf ihrer dem Rahmen abgewandten Oberseite eine Öffnung im Gehäuse 12 auf, durch die das lasteinleitende Element der jeweiligen Wägezelle 3 (das als zylindrischer Zapfen mit einem Durchmesser von 1 mm ausgebildet ist und hier aufgrund der Verdeckung durch den nachstehend beschriebenen Adapter nicht sichtbar ist) auf der Wägezelloberseite nach außen geführt ist. Auf den Zapfen jeder Wägezelle 3 ist ein zylinderförmiger Adapter 4 (hier sind lediglich die beiden Adapter 4c und 4d der Zellen 3c und 3b sichtbar) aufgeschraubt, der ebenfalls zylindrisch, jedoch mit einem Durchmesser von 3 mm ausgebildet ist. Die Adapter 4 verbinden die lasteinleitenden Elemente mit den nachfolgend beschriebenen Behältnissen 2a bis 2d und dienen als vergrößerte Auflagefläche zum Befestigen der Behältnisse (vergrößert im Vergleich zu einer direkten Auflage der Behältnisse auf den lasteinleitenden Elemente der Wägezellen). Die Adapter 4 übertragen somit die Gewichtskräfte der befüllten Behältnisse 2 auf die lasteinleitenden Elemente der Wägezellen 3.

Die einzelnen Behältnisse 2a bis 2d sind hier als (in der B-L-Ebene, also in derjenigen Ebene, in der die Behältnisse angeordnet sind gesehen) rautenförmige Hohlkörper ausgebildet, wobei die Längsachsen der rautenförmigen Behältnisse 2a bis 2d mit den Bezugszeichen 11a bis 11d versehen sind (vgl. Figur 1b). Die Rautendiagonalen der Hohlkörper 2a bis 2d entlang dieser Längsachsen 11a bis 11d weisen hier eine Ausdehnung auf, die die Ausdehnung der anderen Rautendiagonalen (senkrecht zu den Achsen 11a bis 11d) um den Faktor 4.0 übertrifft. Die Länge der Rautendiagonalen entlang der Längsachsen 11a bis 11d beträgt hier 88 mm, die maximale Ausdehnung der Hohlkörper 2a bis 2d in Richtung quer zu den Achsen 11 beträgt 22 mm. Die Ausdehnung senkrecht zur B-L-Ebene (Höhe der Behältnisse 2) beträgt hier ebenfalls 22 mm.

Um eine möglichst ausgewogene Krafteinleitung zu gewährleisten (Vermeidung von Verkippungen bzw. von Drehmomenten) und um somit die hier verklebte Befestigung der Behältnisse 2 an den Adaptern 4 möglichst wenig zu belasten, sind die Behältnisse 2 zentrisch auf den Adaptern 4 positioniert (Anordnung der Schwerpunkte der Behältnisse 2 oberhalb der lasteinleitenden Elemente der Wägezellen 3).

Die Gefäße 2 sind hier aus PVC mit einer Wandstärke von 0,5 bis 1 mm ausgebildet, wobei sowohl die Außenflächen als auch die Innenflächen (also die inneren Wände der Hohlräume der Behältnisse) bei Bedarf mit einer Nanometer dicken Metallbeschichtung versehen sind. Die Gefäße wiegen hier somit jeweils lediglich 6-8 g, sind also so leicht, dass Wägegefäßvolumina von mehr als 12 ml erreicht werden (Wägebereich der Wägezellen 20 g bei einer Auflösung von 0.01 mg und einer Vorlast von 5 g).

Statt die Behältnisse mit ihren Unterseiten auf den Oberseiten der Adapter 4 durch eine Klebeschicht zu fixieren, können die Behältnisse 2 auch relativ zu den Adaptern 4 verschiebbar (beispielsweise durch Schienen) auf der Oberfläche der Adapter 4 fixiert werden (hier nicht gezeigt).

Wie Figur 1 zeigt, ragen jeweils die den Behältnissen 2 bzw. Wägezellen 3 der gegenüberliegenden Reihe zugewandten äußeren Enden 5 der Behältnisse 2 soweit über die (der mittig zwischen den beiden Reihen 7-1 und 7-2 und parallel zu diesen verlaufenden Geraden 8 zugewandten) Stirnflächen der Wägezellen 3 über, dass diese Enden 5 (genauer gesagt: die an diesen Enden ausgebildeten Einfüllstutzen 6) auf einer Geraden 8 aufgereiht sind. Durch die variierenden Winkelstellungen α (siehe nachfolgend) sind unmittelbar benachbarte Enden 5 bzw. Einfüllstutzen 6 aneinander angrenzend und mit jeweils konstanten Abständen voneinander entlang der Geraden 8 ausgebildet.

Jedes Behältnis weist somit an seinem auf der Geraden 8 liegenden Ende 5 genau einen zylinderförmigen, mit seiner Längsachse in H-Richtung (also vertikal) verlaufenden, als Hohlrohr ausgebildeten Einfüllstutzen 6 auf, der zur Aufnahme eines Pipettenkanals K ausgebildet ist. Die Ausdehnung der auf die Behälteroberseite aufgesetzen Einfüllstutzen 6 in H-Richtung ist dabei etwa so groß wie die Ausdehnung der Behältnisse in dieser Richtung. Durch die Winkelverschwenkung α (siehe nachfolgend) sind die vier Einfüllstutzen 6a bis 6d somit unmittelbar benachbart zueinander (aber sich nicht berührend), mit parallelen Längsachsen und entlang der Geraden 8 aufgereiht positioniert. Die Ausbildung der Behältnisse 2 samt ihrer Einfüllstutzen 5 erfolgt dabei einstückig aus gegebenenfalls metallbeschichtetem PVC. Der Außendurchmesser der Einfüllstutzen beträgt hier 7,5 mm, der Innendurchmesser 4,5 mm.

Über die Einfüllstutzen 6a bis 6d können somit die jeweiligen Prüfvolumina der einzelnen Pipettenkanäle in die inneren Hohlräume der Behältnisse 2a bis 2d eingeleitet werden. Nach dem Auffüllen der Behältnisse können somit die Behältnisse samt der darin befindlichen Prüfvolumina vermittels der Wägezellen 3a bis 3d parallel, also gleichzeitig gewogen werden, um die verwendete Mehrkanalpipette zu prüfen. Anschließend kann ein Entleeren der einzelnen Behältnisse 2a bis 2d mittels einer an sich bekannten Sau^{g}vorrichtung (Saugpumpe) erfolgen, indem z.B. Nadeln der Saugvorrichtung durch die Einfüllstutzen 6a bis 6d ins Innere der Behältnisse 2a bis 2d geführt werden, um die Prüfvolumina abzusaugen.

Die Geometrie der Anordnung der einzelnen Wägezellen, ihrer Behältnisse und deren Enden bzw. Einfüllstutzen zeigen die Figuren 1b und 1c (Aufsicht auf die B-L-Ebene).

Mit der Prüfvorrichtung mit 4 Wägezellen können, wie Fig. 3 zeigt, nicht nur 4-Kanal-Pipetten, sondern auch 8-,12- und 16-Kanal-Pipetten geprüft werden. Dazu sind mehrere Prüfdurchgänge erforderlich. Bei einer 12-Kanal-Pipette werden z.B. zuerst die Kanäle 1-4 (Fig. 3a), im 2. Durchgang die Kanäle 5-8 (Fig. 3b) und im 3. Durchgang die Kanäle 9-12 geprüft. Nach ISO 8655 sollen bei der Prüfung (um Kippeffekte zu vermeiden) alle Kanäle mit Spitzen bestückt und gefüllt werden. Bei den Prüfvorrichtungen mit 4 oder 8 Wägezellen wird der Inhalt der bei dem Durchgang nicht geprüften Kanäle in zwei Behälter B1, B2 pipettiert, die entlang der Geraden 8 gesehen beidseits der Einfüllöffnungen bzw. -stutzen 6a bis 6d der Wägegefäße (Behältnisse 2a bis 2d) angebracht sind. Der Inhalt dieser Behälter läuft über einen Ablauf A1, A2 (z. B. umfassend einen Schlauch) in einen externen Auffangbehälter (Gefäße G1, G2, von denen nur das Gefäß G2 gezeigt ist), der ab und zu geleert werden muss.

Wie die Figuren 1b und 1c andeuten, kann die beispielhafte Prüfvorrichtung mit 4 Wägezellen der Fig. 1 für Mehrkanalpipetten durch Hinzufügen weiterer Wägezellen samt zugehöriger Behältnisse (vgl. die angedeuteten Wägezellen 3e und 3f) erweitert werden. Insbesondere ist eine Erweiterung auf insgesamt 12 Wägezellen (sechs in Breitenrichtung B aufeinander gestapelte Wägezellen je Reihe 7-1 und 7-2) zum Prüfen von 12-Kanal-Pipetten in einem Durchgang möglich.

Betrachtet man die Lage der einzelnen entlang der Geraden 8 unmittelbar (d.h. aneinander anstoßend) nebeneinander angeordneten einzelnen Einfüllstutzen 6a, 6b, ..., so wird sichtbar (Figur 1c), dass der Abstand aES unmittelbar benachbarter Einfüllstutzen im gezeigten Ausführungsbeispiel identisch zur lateralen Ausdehnung des (also zum Außenrohrdurchmesser der Einfüllstutzen) ist. Dieser Abstand aES ist hier (vgl. 1b) um etwa den Faktor 2.5 kleiner als der Abstand aWZ zweier unmittelbar benachbarter Wägezellen 3 in Breitenrichtung B bzw. entlang der Geraden 8 gesehen (der Abstand aWZ entspricht hier der Breite B einer Wägezelle, da die Wägezellen einer Reihe 7-1 bzw. 7-2 unmittelbar aneinandergrenzend aufeinander gestapelt sind).

Um dennoch die einzelnen Einfüllstutzen 6a, 6b, ... entsprechend der Anordnung der einzelnen Pipettenkanäle Ka, Kb ... unmittelbar aneinandergrenzend entlang der Geraden 8 anordnen zu können, ist somit ausgehend vom Zentrum 9 der Anordnung der Einfüllstutzen (entlang der Geraden 8 beidseits nach außen gesehen) eine zunehmende Verschwenkung α zwischen der Längsachse 10 einer Wägezelle 3 einerseits (in Richtung L zeigend) und der Längsachse 11 des von dieser Wägezelle getragenen Behältnisses 2 andererseits notwendig: so beträgt der Winkel α zwischen der Längsachse 10 der Wägezelle 3 und der Längsachse des darauf positionierten Behältnisses für die beiden (entlang der Geraden 8 gesehen) mittleren Wägezellen 3b und 3c im Fall der 4-Kanalpipetten-Konfiguration der Figur 1a 0°, wohingegen dieser Winkel α für die beiden äußeren Wägezellen 3a und 3d hier α = 10° beträgt. Mit zunehmender Erweiterung der Wägezellenzahl ist vom Zentrum 9 entlang der Geraden nach außen hin ein zunehmender Verschwenkungswinkel α notwendig, um sämtliche Einfüllstutzen 6 unmittelbar nebeneinander entlang der Geraden 8 anordnen zu können. Diese geometrische Tatsache begrenzt letztendlich die Maximalzahl der parallel prüfbaren Pipettenkanäle.

Figur 2 zeigt eine konkrete Ausführungsform einer Prüfvorrichtung 1 gemäß Figur 1 in einer Explosionszeichnung, bei der die wesentlichen Bauelemente auch des Schutzgehäuses sichtbar sind. Wie Figur 2 erkennen lässt, kann die erfindungsgemäße Prüfvorrichtung 1 als transportable Einheit ausgebildet werden.

## Patentansprüche

1. Prüfvorrichtung (1) zum gravimetrischen Prüfen einer Mehrkanalpipette (P), die mehrere Pipettenkanäle (Ka, Kb, ...) aufweist, mit
je Pipettenkanal (Ka, Kb, ...) einem Behältnis (2a, 2b, ...) zur Aufnahme des Prüfvolumens des Pipettenkanals, und
je Behältnis (2a, 2b, ...) einer Wägezelle (3a, 3b, ...) zum Wiegen des Behältnisses (2a, 2b, ...) und/oder des Prüfvolumens,
wobei die Behältnisse (2a, 2b, ...) als Lastaufnehmer der Wägezellen (3a, 3b, ...) ausgebildet sind,
**dadurch gekennzeichnet dass**
mindestens eines der Behältnisse (2a, 2b, ...) als mit dem Prüfvolumen seines Pipettenkanals befüllbarer Hohlkörper ausgebildet ist und zentrisch auf dem lasteinleitenden Element seiner Wägezelle (3a, 3b, ...) angeordnet ist, wobei der Hohlkörper ein länglicher, sich von seinem Zentrum nach zumindest einem (5a, 5b, ...) seiner beiden äußeren Enden hin verjüngender Hohlkörper ist, und in einem Schnitt durch seine Längsachse und/oder parallel zu einer Ebene, in der die Wägezellen und/oder in der die Behältnisse angeordnet sind, orientiert ist.

2. Prüfvorrichtung (1) nach dem vorhergehenden Anspruch
***dadurch gekennzeichnet, dass***
die Wägezellen (3a, 3b, ...) in zwei Reihen (7-1, 7-2) angeordnet sind, wobei die lasteinleitenden Elemente der Wägezellen (3a, 3b, ...) einer jeder dieser Reihen (7-1, 7-2) jeweils auf derjenigen Seite dieser Wägezellen (3a, 3b, ..,) positioniert sind, die den Wägezellen der jeweils anderen Reihe zugewandt ist.

3. Prüfvorrichtung (1) nach einem der vorhergehenden Ansprüche
***dadurch gekennzeichnet, dass***
die Behältnisse (2a, 2b, ...) jeweils einen zur Aufnahme einer Pipettenspitze ausgebildeten Einfüllstutzen (6a, 6b, ...) zum Befüllen des jeweiligen Hohlkörpers aufweisen.

4. Prüfvorrichtung (1) nach einem der vorhergehenden Ansprüche
***dadurch gekennzeichnet, dass***
mindestens eines der Behältnisse (2a, 2b, ...) samt seines Einfüllstutzens (6a, 6b, ...) einstückig ausgebildet ist.

5. Prüfvorrichtung (1) nach einem der vorhergehenden Ansprüche
***gekennzeichnet durch***
je Wägezelle (3a, 3b, ...) einen Adapter (4a, 4b, ...), über den die Wägezelle (3a, 3b, ...) mit ihrem Behältnis (2a, 2b, ...) verbunden ist.

6. Prüfvorrichtung (1) nach einem der vorhergehenden Ansprüche
***dadurch gekennzeichnet, dass***
mindestens eines der Behältnisse (2a, 2b, ...) zumindest abschnittsweise einen Kunststoff, insbesondere Polyvinylchlorid, enthält oder daraus besteht.,
wobei dieser Kunststoff vorzugsweise zumindest abschnittsweise mit einer Metallbeschichtung, insbesondere einer Goldbeschichtung, versehen ist.

7. Prüfvorrichtung (1) nach einem der vorhergehenden Ansprüche
***dadurch gekennzeichnet, dass***
die Behältnisse (2a, 2b, ...) jeweils zentrisch auf den lasteinleitenden Elementen ihrer Wägezellen (3a, 3b, ...) angeordnet sind.

8. Prüfvorrichtung (1) nach Anspruch 3
***dadurch gekennzeichnet, dass***
die Einfüllstutzen (6a, 6b, ...) der zu den Wägezellen (3a, 3b, ...) der beiden Reihen (7-1, 7-2) gehörenden Behältnisse (2a, 2b, ...) auf einer zwischen den beiden Reihen (7-1, 7-2) verlaufenden Geraden (8) positioniert sind, wobei entlang dieser Geraden (8) gesehen abwechselnd Einfüllstutzen (6a, 6b, ...) von Behältnissen (2a, 2b,...) einer (7-1) der beiden Reihen und von Behältnissen (2a, 2b,...) der anderen (7-2) der beiden Reihen angeordnet sind.,
wobei unmittelbar benachbarte Einfüllstutzen (6a, 6b, ...) bevorzugt ohne Zwischenraum nebeneinanderliegend angeordnet sind.

9. Prüfvorrichtung (1) nach dem vorhergehenden Anspruch
***dadurch gekennzeichnet, dass***
der Abstand *aWZ* unmittelbar benachbarter Wägezellen (3a, 3b, ...) in mindestens einer der beiden Reihen größer ist als der Abstand *aES* unmittelbar benachbarter Einfüllstutzen (6a, 6b, ...) entlang der Geraden (8), als die maximale laterale Ausdehnung *dES* dieser Einfüllstutzen (6a, 6b, ...) und/oder als der Abstand benachbarter Pipettenkanäle (Ka, Kb, ...) der Mehrkanalpipette (P).

10. Prüfvorrichtung (1) nach einem der beiden vorhergehenden Ansprüche
***dadurch gekennzeichnet, dass***
entlang dieser Geraden (8) von dem/den im Zentrum (9) der Einfüllstutzenanordnung liegenden Einfüllstutzen (6c, 6d) beidseits nach außen gesehen der Winkel (α) zwischen der Längsachse (10a, 10b, ...) der Wägezellen (3a, 3b, ...) einerseits und der Längsachse (11a, 11b, ...) der jeweils zugehörigen Behältnisse (2a, 2b, ...) andererseits zunimmt.

11. Prüfvorrichtung (1) nach einem der vorhergehenden Ansprüche
***dadurch gekennzeichnet, dass***
die Wägezellen (3a, 3b, ...) Gehäuse (12a, 12b) umfassen, die in einer ersten Raumrichtung der Breitenrichtung B, eine um mindestens den Faktor drei geringere Ausdehnung aufweisen als in zwei anderen Raumrichtungen, der Längenrichtung L und der Höhenrichtung H, und dass die Breitenrichtung (B) der Wägezellen (3a, 3b, ...) in einer durch die Anordnung der Behältnisse (2a, 2b, ...) und/oder-bei Rückbezug auf Anspruch 2 oder 4 - durch die beiden Reihen (7-1, 7-2) definierten Ebene liegt und/oder - bei Rückbezug auf Anspruch 9 - parallel zur Geraden (8) verläuft.

## Claims

1. A testing device (1) for gravimetric testing of a multi-channel pipette (P) which has a plurality of pipette channels (Ka, Kb, ...), with,
per pipette channel (Ka, Kb, ...), one receptacle (2a, 2b, ...) for receiving the test volume of the pipette channel, and,
per receptacle (2a, 2b, ...), one load cell (3a, 3b, ...) for weighing the receptacle (2a, 2b, ...) and/or the test volume,
wherein the receptacles (2a, 2b, ...) are formed as the load sensor of the load cells (3a, 3b, ...),
**characterised in that**
at least one of the receptacles (2a, 2b, ...) is formed as a hollow body which can be filled with the test volume of its pipette channel and is arranged centrally on the load-applying element of its load cell (3a, 3b, ...), the hollow body being an elongate hollow body which tapers from its centre towards at least one (5a, 5b, ...) of its two outer ends, and is oriented in a section through its longitudinal axis and/or parallel to a plane in which the load cells and/or in which the receptacles are arranged.

2. A testing device (1) according to the preceding claim,
**characterised in that**
the load cells (3a, 3b, ...) are arranged in two rows (7-1, 7-2), the load-applying elements of the load cells (3a, 3b, ...) of each one of these rows (7-1, 7-2) being positioned in each case on that side of these load cells (3a, 3b, ...) which faces the load cells of the respective other row.

3. A testing device (1) according to one of the preceding claims,
**characterised in that**
the receptacles (2a, 2b, ...) in each case have a filler neck (6a, 6b) designed in each case to receive a pipette tip for filling the respective hollow body.

4. A testing device (1) according to one of the preceding claims,
**characterised in that**
at least one of the receptacles (2a, 2b, ...) plus its filler neck (6a, 6b, ...) is formed of one piece.

5. A testing device (1) according to one of the preceding claims,
**characterised by**,
per load cell (3a, 3b, ...), one adapter (4a, 4b, ...), via which the load cell (3a, 3b, ...) is connected to its receptacle (2a, 2b, ...).

6. A testing device (1) according to one of the preceding claims,
**characterised in that**
at least one of the receptacles (2a, 2b, ...), at least in sections, contains or consists of a plastics material, in particular polyvinyl chloride,
this plastics material preferably being provided at least in sections with a metal coating, in particular a gold coating.

7. A testing device (1) according to one of the preceding claims,
**characterised in that**
the receptacles (2a, 2b, ...) are arranged in each case centrically on the load-applying elements of their load cells (3a, 3b, ...).

8. A testing device (1) according to Claim 3,
**characterised in that**
the filler necks (6a, 6b, ...) of the receptacles (2a, 2b, ...) belonging to the load cells (3a, 3b, ...) of the two rows (7-1, 7-2) are positioned on a straight line (8) extending between the two rows (7-1, 7-2), with, viewed along this straight line (8), filler necks (6a, 6b, ...) of receptacles (2a, 2b...) of one (7-1) of the two rows and of receptacles (2a, 2b, ...) of the other one (7-2) of the two rows being arranged alternately,
with directly adjacent filler necks (6a, 6b, ...) being arranged lying next to one another preferably without an intermediate space.

9. A testing device (1) according to the preceding claim,
**characterised in that**
the distance *aWZ* between directly adjacent load cells (3a, 3b, ...) in at least one of the two rows is greater than the distance *aES* between directly adjacent filler necks (6a, 6b, ...) along the straight line (8), than the maximum lateral extent *dES* of these filler necks (6a, 6b, ...) and/or than the distance between adjacent pipette channels (Ka, Kb, ...) of the multi-channel pipette (P).

10. A testing device (1) according to one of the two preceding claims,
**characterised in that**
along this straight line (8) from the filler neck(s) (6c, 6d) located in the centre (9) of the filler-neck arrangement on both sides viewed outwards the angle (α) between the longitudinal axis (10a, 10b, ...) of the load cells (3a, 3b, ...) on one hand and the longitudinal axis (11a, 11b, ...) of the respective associated receptacles (2a, 2b, ...) on the other hand increases.

11. A testing device (1) according to one of the preceding claims,
**characterised in that**
the load cells (3a, 3b, ...) comprise housings (12a, 12b) which in a first spatial direction, the width direction B, have an extent which is less by at least a factor of three than in two other spatial directions, the length direction L and the height direction H, and **in that** the width direction (B) of the load cells (3a, 3b, ...) lies in a plane defined by the arrangement of the receptacles (2a, 2b, ...) and/or - if depending from Claim 2 or 4 - by the two rows (7-1, 7-2), and/or - if depending from Claim 9 - extends parallel to the straight line (8).

## Revendications

1. Dispositif de contrôle (1) permettant le contrôle gravimétrique d'une pipette multicanaux (P), qui comporte plusieurs canaux (Ka, Kb, ...), comportant
pour chaque canal (Ka, Kb, ...) de la pipette un récipient (2a, 2b, ...) destiné à recevoir le volume de contrôle du canal de la pipette, et
pour chaque récipient (2a, 2b, ...) une cellule de pesage (3a, 3b, ...) pour peser le récipient (2a, 2b, ...) et/ou le volume de contrôle,
les récipients (2a, 2b, ...) étant réalisés sous forme de récepteurs de charge des cellules de pesage (3a, 3b, ...),
**caractérisé en ce que**
au moins un des récipients (2a, 2b, ...) est réalisé sous la forme d'un corps creux remplissable avec le volume de contrôle de son canal de pipette et est disposé de manière centrée sur l'élément d'introduction de la charge de sa cellule de pesage (3a, 3b, ...), ledit corps creux étant un corps creux effilé, qui se rétrécit à partir de son centre vers au moins l'une (5a, 5b) de ses deux extrémités extérieures, et est orienté selon une coupe par son axe longitudinal et/ou parallèlement à un plan dans lequel sont disposées les cellules de pesage et/ou dans lequel sont disposés les récipients.

2. Dispositif de contrôle (1) selon la revendication précédente, **caractérisé en ce que** les cellules de pesage (3a, 3b, ...) sont disposées sur deux rangs (7-1, 7-2), les éléments d'introduction de la charge des cellules de pesage (3a, 3b, ...) de chacun de ces rangs (7-1, 7-2) étant positionnés sur le côté de ces cellules de pesage (3a, 3b, ...) qui est orienté vers les cellules de pesage de l'autre rang respectif.

3. Dispositif de contrôle (1) selon l'une quelconque des revendications précédentes, **caractérisé en ce que** les récipients (2a, 2b, ...) comportent chacun une tubulure d'admission (6a, 6b, ...), qui est réalisée pour recevoir une pointe de la pipette et est utilisée pour le remplissage du corps creux respectif.

4. Dispositif de contrôle (1) selon l'une quelconque des revendications précédentes, **caractérisé en ce qu'**au moins un des récipients (2a, 2b, ...) est réalisé d'un seul tenant conjointement avec sa tubulure d'admission (6a, 6b, ...).

5. Dispositif de contrôle (1) selon l'une quelconque des revendications précédentes, **caractérisé par** un adaptateur (4a, 4b, ...) pour chaque cellule de pesage (3a, 3b, ...), par l'intermédiaire duquel la cellule de pesage (3a, 3b, ...) est reliée à son récipient (2a, 2b, ...).

6. Dispositif de contrôle (1) selon l'une quelconque des revendications précédentes, **caractérisé en ce qu'**au moins un des récipients (2a, 2b, ...) contient au moins par zones une matière plastique, en particulier un polychlorure de vinyle, ou est réalisé dans ce matériau,
ladite matière plastique étant munie, de préférence au moins par zones, d'un revêtement métallique, en particulier un revêtement d'or.

7. Dispositif de contrôle (1) selon l'une quelconque des revendications précédentes, **caractérisé en ce que** les récipients (2a, 2b, ...) sont disposés chacun de manière centrée sur les éléments d'introduction de la charge de leurs cellules de pesage (3a, 3b, ...).

8. Dispositif de contrôle (1) selon la revendication 3, **caractérisé en ce que** les tubulures d'admission (6a, 6b, ...) des récipients (2a, 2b, ...) appartenant aux cellules de pesage (3a, 3b, ...) des deux rangs (7-1, 7-2) sont positionnées sur une droite (8) qui s'étend entre les deux rangs (7-1, 7-2), des tubulures d'admission (6a, 6b, ...) des récipients (2a, 2b, ...) de l'un (7-1) des deux rangs étant disposées le long de ladite droite (8) en alternance avec des récipients (2a, 2b, ...) de l'autre (7-2) des deux rangs,
des tubulures d'admission (6a, 6b, ...) directement adjacentes étant disposées de préférence les unes à côté des autres sans laisser d'espace intermédiaire.

9. Dispositif de contrôle (1) selon la revendication précédente, **caractérisé en ce que** la distance *aWZ* entre des cellules de pesage (3a, 3b, ...) directement adjacentes dans au moins l'un des deux rangs est supérieure à la distance *aES* entre des tubulures d'admission (6a, 6b, ...) directement adjacentes le long de la droite (8), à l'extension latérale maximale *dES* de ces tubulures d'admission (6a, 6b, ...) et/ou à la distance entre les canaux (Ka, Kb, ...) adjacents de la pipette multicanaux (P).

10. Dispositif de contrôle (1) selon l'une des deux revendications précédentes, **caractérisé en ce que** l'angle (α) entre l'axe longitudinal (10a, 10b, ...) des cellules de pesage (3a, 3b, ...), d'une part, et l'axe longitudinal (11a, 11b, ...) de chacun des récipients (2a, 2b, ...) correspondants, d'autre part, augmente le long de cette droite (8), considérée à partir de la/des tubulures d'admission (6c, 6d), située(s) au centre (9) de l'ensemble de tubulures d'admission, de part et d'autre vers l'extérieur.

11. Dispositif de contrôle (1) selon l'une quelconque des revendications précédentes, **caractérisé en ce que** les cellules de pesage (3a, 3b, ...) comportent des boîtiers (12a, 12b) qui, dans une première direction dans l'espace, à savoir le sens de la largeur B, possèdent une extension au moins trois fois inférieure à celle dans les autres directions dans l'espace, à savoir le sens de la longueur L et le sens de la hauteur H, et **en ce que** le sens de la largeur (B) des cellules de pesage (3a, 3b, ...) se situe dans un plan défini par l'agencement des récipients (2a, 2b, ...) et/ou - par référence à la revendication 2 ou 4 - par les deux rangs (7-1, 7-2), et/ou s'étend - par référence à la revendication 9 - parallèlement à la droite (8).
